(19) Europäisches Patentamt
European Patent Office
Office européen des brevets

(11) **EP 3 623 154 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **19195029.4**

(22) Anmeldetag: **03.09.2019**

(51) Int Cl.:
*B32B 27/36* (2006.01)      *B29D 7/01* (2006.01)
*B32B 27/08* (2006.01)      *B32B 27/18* (2006.01)
*B32B 27/30* (2006.01)      *B32B 27/32* (2006.01)
*B32B 27/34* (2006.01)      *B65D 65/40* (2006.01)
*C08J 5/18* (2006.01)      *C08L 67/02* (2006.01)

(54) **HEISSSIEGELBARE POLYESTERFOLIE FÜR DIE HERSTELLUNG VON MENÜSCHALEN, VERFAHREN ZU IHRER HERSTELLUNG UND IHRE VERWENDUNG**

HEAT-SEALABLE POLYESTER FILM FOR THE PRODUCTION OF TRAYS, METHOD FOR THE PRODUCTION AND USE THEREOF

FEUILLE DE POLYESTER THERMOSCELLABLE POUR LA FABRICATION DE BARQUETTES REPAS, SON PROCÉDÉ DE FABRICATION ET SON UTILISATION

(84) Benannte Vertragsstaaten:
**AT CH CZ DE DK ES FR GB IT LI LU NL PL RO**

(30) Priorität: **11.09.2018 DE 102018215422**

(43) Veröffentlichungstag der Anmeldung:
**18.03.2020 Patentblatt 2020/12**

(73) Patentinhaber: **Mitsubishi Polyester Film GmbH**
**65203 Wiesbaden (DE)**

(72) Erfinder:
• **Peiffer, Herbert**
  **55126 Mainz (DE)**
• **Jesberger, Martin**
  **55128 Mainz (DE)**
• **Kuhmann, Bodo**
  **65594 Runkel (DE)**
• **Fischer, Viktor**
  **68723 Oftersheim (DE)**
• **Rentzsch, Tobias**
  **61350 Bad Homburg (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**DE-A1- 10 318 102      DE-T2- 69 706 201**
**US-A1- 2014 065 431**

**Beschreibung**

**Patentfamilie**

Die Erfindung betrifft eine coextrudierte und ungestreckte, transparente und thermoformbare Polyesterfolie mit einer heißsiegelbaren Schicht zur Herstellung von Menüschalen. Die thermoformbare und heißsiegelbare Polyesterfolie dient — nachdem sie zu einer Menüschale thermogeformt ist - zur Aufnahme von Lebensmittel, z.B. Frischfleisch, Fisch oder Geflügel. Die Erfindung betrifft weiterhin ein Verfahren zur Herstellung der Folie und ihre Verwendung.

**Hintergrund**

Transparente Menüschalen (engl. tray) aus thermoformbarem, amorphem Polyethylenterephthalat (a-PET) werden in der Lebensmittelindustrie, z.B. unter Anwendung von Vakuumverfahren hergestellt. Nach dem Befüllen mit dem Lebensmittel wird — zum Schutz des Lebensmittel vor äußeren Einflüssen — eine Deckelfolie auf den Rand der Menüschale aufgesiegelt und damit die Packung fest verschlossen. Solche Packungen finden ihren Einsatz bei vorgekochtem Fleisch, Frischfleisch, Fisch, Geflügel und trockenen FertigProdukten wie Sandwiches, Burger oder Wraps. Das Zubereiten der Produkte in solchen Packungen wird als sauber und hygienisch angesehen und erfreut sich deshalb einer großen Beliebtheit.

Eine wirtschaftliche Methode, hygienische Packungen für die Verarbeitung von Fleisch, Fisch oder Geflügel herzustellen, besteht in der Anwendung von sogenannten Vakuumverfahren. Hierbei wird die fertige Packung allgemein wie folgt hergestellt: Die Folie für die Herstellung der Menüschalen (auch mit Unterfolie bezeichnet) wird als Rolle in die Maschine eingespannt. Über Vakuumkammern wird die Folie bis zu einer gewünschten Tiefe durch Anwendung von Temperatur und Vakuum zu einer Menüschale thermogeformt. Es erfolgt das Einlegen des Lebensmittelproduktes in die Menüschale, händisch - oder bei großen Stückzahlen — im Wesentlichen maschinell. Über eine weitere Rolle wird die Deckelfolie (auch mit Oberfolie bezeichnet) der Menüschale zugeführt und auf deren Rand unter Anwendung von Temperatur und Druck fest versiegelt. Die thermogeformten und mit der Deckelfolie fest versiegelten Menüschalen werden in einzelne Packungen, z.B. durch Stanzen aufgetrennt und gelangen nach weiteren Operationen, wie Bedruckung oder Etikettierung, in den Markt.

Das bei der Produktion der Menüschalen zurückgebliebene Stanzgitter (engl. "skeletal waste") macht dabei bis zu 50 % der eingesetzten Folie aus, aus der die Menüschalen hergestellt wurden. Zur Reduzierung dieses Abfalls ist es wünschenswert, wenn das Stanzgitter der Extrusion zur Herstellung neuer thermoformbarer Folie, z.B. als Regranulat, direkt zugeführt werden kann.

Bei der Entwicklung von Packungen mit neuen und verbesserten Eigenschaften wird aus anwendungstechnischer Sicht eine dauerhafte, zumindest feste Heißversiegelung von der mit dem Lebensmittel gefüllten Menüschale und der Deckelfolie gefordert.

Eine feste Heißversiegelung wird von Seiten der Anwendung erreicht, wenn die Siegelkraft im Bereich von ungefähr 3 bis 10 N je 15mm Streifenbreite der Folie liegt. Bei Werten darunter spricht man von einer leichten Heißversiegelung und bei Werten darüber spricht man von einer starken, widerstandsfähigen Heißversiegelung.

Eine feste Heißversiegelung wird insbesondere bei der Herstellung von Verpackungen von frischem Fleisch gewünscht, bei der die Befüllung der Menüschale in der Regel maschinell durchgeführt wird. Beim Einfüllen des Lebensmittels in die Menüschale kann es dabei vorkommen, dass der Dicht- oder Siegelrand der Menüschale mit kleinen Mengen von Lebensmittelsubstanzen, beispielsweise Fleischsaft, kontaminiert wird. Die Heißversiegelung von beiden Folien muss in diesem Fall komplett durch die mit Fleischsaft kontaminierte Fläche erfolgen.

Die bisher technisch übliche Lösung von diesem Problem besteht in der Verwendung von mehrschichtigen Kunststofffolien, sowohl für die thermoformbare Unterfolie als auch für die siegelfähige Ober- oder Deckelfolie.

Wird für beide Folien Polyester verwendet, für die Unterfolie z.B. thermoformbares a-PET und für die Oberfolie z.B. biaxial orientiertes PET, so wird bei den genannten mehrschichtigen Kunststofffolien die jeweilige Versiegelungsschicht aus einer anderen Art von Kunststoff als a-PET aufgebaut.

Dieser andere Art von Kunststoff ist so ausgesucht, dass sie bei der gewünschten niedrigen Siegeltemperatur schmelzbarer und im geschmolzenen Zustand deutlich duktiler als a-PET ist. Typische Materialien hierfür sind Polypropylen (PP), insbesondere aber Polyethylen (PE), welches den niedrigsten Schmelzpunkt aufweist und im geschmolzenen Zustand sehr duktil ist. Beide Materialien, PP als auch PE können durch Laminieren, Extrusionsbeschichtung oder durch Coextrusion auf die Basisschicht aus Polyester aufgebracht werden.

Verpackungen, bei denen die Basisschicht für die Menüschale und die Basisschicht für die Deckelfolie aus Polyester und Siegelschichten aus PE bestehen, sind am Markt als PET-PE Lösung bekannt.

Ein bekanntes Problem tritt auf, wenn frisches Fleisch in a-PET-Menüschalen mit Deckeln aus Polyester verpackt wird. Bei Verwendung dieser Materialkombination wird oftmals an der fertigen Verpackung beobachtet, dass die Siegelung nicht mehr komplett ist. Es wird festgestellt, dass die Packung nur lose gesiegelt ist, beim Transport aufgeht oder nicht mehr gasdicht ist. Bei Verpackungen mit modifizierter Atmosphäre (MAP) kann die gesiegelte Dichtfläche die modifizierte Atmosphäre innerhalb des Behälters für die angegebene Haltbarkeit (engl. shelflife) nicht halten, was zu einem beschleunigten Zerfall des im Behälter gelagerten Lebensmittels führt.

Die Heißversiegelung der Menüschale aus thermoformbarem Polyester mit der Deckelfolie - ebenfalls aus Polyester - erfolgt bei Siegeltemperaturen zwischen 120 und 220 °C, bei einer "reinen Polyesterlösung" typischer Weise bei 160 bis 220 °C. Eine Wirtschaftlichkeit des Verfahrens ist gegeben, wenn die Siegelzeit auf 3 Sekunden und weniger beschränkt werden kann.

Es lässt sich festhalten, dass es derzeit am Markt zwei verschiedene Folienkonzepte für den Aufbau der Packung gibt, die nebeneinander angewendet werden

- Die Folien sind beide komplett aus Polyesterpolymeren aufgebaut, wobei die Folien ein- oder mehrschichtig aufgebaut sind
- Die Folien sind in den "Kern- oder Basisschichten" aus Polyesterpolymeren aufgebaut, wobei die Siegelschichten aus Polypropylen, insbesondere aber aus Polyethylen bestehen.

Die vorliegende Erfindung bezieht sich auf die Lösung für eine siegelfähige, thermoformbare Unterfolie aus Polyesterpolymeren, die für die Heißversiegelung durch mit Fleischsaft o.ä. kontaminierte Flächen geeignet ist.

Eine thermoformbare Unterfolie, die aus nur einem einzigen Material — hier Polyester — hergestellt wird, weist eine Reihe von technischen Vorteilen auf

- Bei der Herstellung der Folien und der Menüschalen entstehender Abfall, u.a. das "skeletal waste", kann leicht aufgearbeitet werden
- Das entsprechend hergestellte Regranulat (Recyclat) kann bei der Herstellung neuer Menüschalen wiederverwendet werden, ohne dass dabei Qualitätseinbußen auftreten
- Die Packung ist optisch ansprechender als die Packung mit bekannter APET-PE-Lösung
- "Post consumer recyling" (PCR) ist einfacher durchführbar, als es bei einer APET-PE-Lösung der Fall ist.

## Stand der Technik

Thermoformbare Folien aus Polyester für die Herstellung von Menüschalen sind bekannt.

In der EP 2 643 238 B1 wird eine Menüschale für Lebensmittel beschrieben, die aus einem ein- oder mehrlagigen Materialbogen gebildet ist, wobei das Material jeder der Lagen wenigstens 85 % amorphes Polyethylenterephthalat enthält. Die Menüschale umfasst einen Bodenteil, Seitenwände und eine periphere Dichtlippe, wobei die Dichtlippe eine im Wesentlichen flache, nach oben gerichtete Dichtungsfläche aufweist. Die Dichtungsfläche weist zusätzlich zu dem Schalenmaterial über den vollen Umfang der Schale eine Lage eines erfindungsgemäßen Klebstoffs auf. Die Schale wird durch Thermoformen des Materialbogens gebildet, wobei der Klebstoff mittels Walzenbeschichtung direkt nach dem Formgebungsprozess der Schale auf die Dichtungsfläche aufgebracht werden kann. Der Klebstoff umfasst Ethylen—Co—und Terpolymere oder Mischungen hiervon, sowie ein Wachs. Der Behälter ist insbesondere für eine Siegelung geeignet, bei der die Dichtungsfläche der Menüschale mit kleinen Mengen von Lebensmittelsubstanzen, beispielsweise Fleischsaft, kontaminiert ist. Die erfindungsgemäße Lösung ist aus mehreren Aspekten verbesserungsbedürftig: Durch das Aufbringen einer zusätzlichen Klebeschicht aus im Wesentlichen Polyethylen auf die Dichtungsfläche wird das Produkt verteuert; beim Prozess entstandene Abfälle können nicht ohne Qualitätsverlust wieder der Extrusion von Folien für die Herstellung von Menüschalen zugeführt werden und das sogenannte "post consumer recyling" ist deutlich erschwert.

In der EP 3 296 227 A1 wird eine Schale für Lebensmittel beschrieben, die aus einem ein-oder mehrlagigen Materialbogen gebildet ist, wobei das Material jeder der Lagen wenigstens 85 % amorphes Polyethylenterephthalat umfasst. Die Schale umfasst einen Bodenteil, Seitenwände und einen umlaufende Dichtungslippe, wobei die Dichtungslippe eine im Wesentlichen flache, nach oben gerichtete Dichtungsfläche aufweist. Zumindest die Schicht der Menüschale, die die Siegelschicht (entspricht der Dichtungsfläche) bildet, ist derart modifiziert, dass sie eine erhöhte Weichheit bei relevanten Siegeltemperaturen aufweist, typischerweise zwischen 120 und 180 °C. Zudem ist diese Schicht (oder Schichten) so modifiziert, dass ihre Oberflächenenergie reduziert ist. Eine verbesserte Weichheit von mindestens der Siegelschicht erhält man durch Modifizierung des in der Schicht enthaltenen Polyethylenterephthalats mittels Comonomeren, wie Isophthalsäure (IPA), Cyclohexandimethanol (CHDM) oder Diethylenglykol (DEG), z.B. durch Coextrusion. Eine Herabsetzung der Oberflächenenergie der Siegelschicht geschieht durch Zugabe eines internen und/oder externen Schlupf- Additivs, z.B. eines Wachses. Intern kann das Additiv z.B. mittels Coextrusion in die Oberflächenschicht eingebracht werden und extern z.B. mittels Beschichtung der Oberflächenschicht.

Die Schale ist für die eingangs genannte Anwendung - Siegelung durch Kontamination - geeignet, sie ist aber verbesserungswürdig in den Siegeleigenschaften und den optischen Eigenschaften. In der Anmeldung werden mehrere Materialien/Additive genannt, die für eine Modifizierung der Oberflächenschicht der Menüschale verwendet werden können. Die Anmeldung enthält jedoch keine expliziten Angaben über Rezepturen oder Verfahren zur Herstellung der Folien, es fehlen auch Angaben zur Dicke der erfindungsgemäßen Oberflächenschicht der Menüschale. Die Patentanmeldung offenbart damit die Erfindung nicht so deutlich und vollständig, dass ein Fachmann sie ausführen, bzw. nacharbeiten kann.

Die DE 103 18 102 A1 beschreibt eine coextrudierte, transparente, biaxial orientierte Polyesterfolie, enthaltend eine Basisschicht (B) und eine heißsiegelbare und gegenüber APET peelfähige Deckschicht (A), wobei die heißsiegelbare und peelfähige Deckschicht (A) aus a) 50-95 Gew.-% Polyester und b) 5-40 Gew.-% eines polyesterunverträglichen Polymers (= anti-PET-Polymer), bezogen auf die Masse der Deckschicht (A), besteht, wobei c) der Polyester aus 20-95 Mol-% an Einheiten aufgebaut ist, die auf mindestens eine aromatische Dicarbonsäure, und 5-80 Mol-% an Einheiten, die auf mindestens eine aliphatische Dicarbonsäure zurückgehen, wobei die Summe der dicarbonsäureabgeleiteten Molprozente 100 ergibt und d) die Schichtdicke der Deckschicht (A) $d_a$ 1,3 bis 3,0 $\mu$m beträgt.

Die DE 697 06 201 T2 beschreibt ungestreckte zweischichtige Polyesterfolien mit einer Gesamtdicke von 20 bis 3000 $\mu$m mit einer Siegelschicht die 1 bis 30% der Dicke der Basisschicht aufweist und die eine Trübung von weniger als 10% besitzt.

## Aufgabenstellung

Aufgabe der vorliegenden Erfindung war es, eine coextrudierte und thermoformbare, im Wesentlichen amorphe, ungestreckte Folie aus Polyester für die eingangs genannte Anwendung zur Verfügung zu stellen, die sich durch hervorragende Siegeleigenschaften auszeichnet. Für den Fall, dass die Siegelschicht der Folie mit kleinen Mengen von Lebensmittelsubstanzen, beispielsweise Fleischsaft, kontaminiert ist, soll die Siegelung zu am Markt erhältlichen Deckelfolien so gut sein, dass eine feste Siegelung erreicht wird. Darüber hinaus soll die Folie eine besonders brillante Optik zeigen. Sie soll die Nachteile von Folien nach dem Stand der Technik nicht mehr aufweisen und sich insbesondere durch die folgenden Punkte/Eigenschaften auszeichnen

- Die thermoformbare Folie, geeignet für die Herstellung von Menüschalen durch Thermoformen, ist mehrschichtig und im Wesentlichen aus Polyesterrohstoffen aufgebaut
- Die thermoformbare Folie soll sich durch eine feste Heißversiegelung auszeichnen. Nach der Siegelung — auch durch kontaminierte Oberflächen, beispielsweise durch Fleischsaft - soll eine dauerhaft feste Versiegelung zwischen der Menüschale und am Markt erhältlichen Deckelfolien vorhanden sein. Eine feste Heißversiegelung wird erreicht, wenn die Siegelkraft im Bereich von ungefähr 3 bis 10 N je 15mm Streifenbreite der Folie liegt.
- Die thermoformbare Folie soll sich durch eine brillante Optik auszeichnen. Dies betrifft die Trübung, insbesondere aber die Clarity der Folie. Es wird gewünscht, dass ihre Trübung kleiner als 10 %, ihre Clarity größer als 80 % und ihr Glanz größer als 100 ist (alle optischen Werte werden direkt nach der Herstellung der Folie gemessen).
- Die thermoformbare Folie soll sich wirtschaftlich herstellen lassen. Dies bedeutet beispielsweise, dass zur Herstellung der Folie in der Industrie übliche Verfahren, z.B. Coextrusionsverfahren, eingesetzt werden können.
- Weiterhin ist es wünschenswert, wenn der bei der Herstellung der thermoformbaren Folie und der Menüschale entstandene Abfall (z.B. das "skeletal waste") ohne Qualitätseinbuße als Regenerat wieder verwendet werden kann
- Gewünscht wird außerdem, dass das Regenerat für die Herstellung von Folien für Menüschalen der eingangs geschilderten Art bis zu 50 % eingesetzt werden kann.

## Lösung der Aufgabe

Gelöst wird die Aufgabe durch die Bereitstellung einer coextrudierten und ungestreckten, transparenten und thermoformbaren Polyesterfolie für Herstellung von Menüschalen, enthaltend zumindest eine Basisschicht (B) aus a-PET und eine heißsiegelbare Deckschicht (A), wobei die heißsiegelbare Deckschicht (A) zumindest 80 Gew.-% Polyester umfasst, wobei

a) der Polyester der Deckschicht (A) aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen und auf Basis von aliphatischen Diolen aufgebaut ist, wobei die Mol-%-Angaben sich immer zu 100 % ergänzen.

b) die Deckschicht (A) bis zu 0,4 Gew.-% anorganische oder organische Partikel mit einem mittleren Durchmesser $d_{50}$ von 2,0 bis 8,0 $\mu$m enthält

c) die Deckschicht (A) eine Schichtdicke von 10 bis 100 $\mu$m aufweist

d) die Folie eine Trübung von weniger als 10 % und eine Clarity von mindestens 80 % besitzt

e) die Folie eine Siegelnahtfestigkeit zu sich selbst (= FIN-Siegelung) aufweist, die im Bereich von 3 bis 10 N/15 mm liegt und

f) die Folie eine Dicke im Bereich von 100 bis 1500 μm aufweist.

Im Vorstehenden wie im Folgenden bezieht sich Gew.-%, sofern nichts anderes erwähnt, immer auf die Masse der jeweiligen Schicht oder das jeweilige System, in dessen Zusammenhang die Angabe genannt ist.

Die thermoformbare Folie nach der vorliegenden Erfindung wird im Wesentlichen durch eine coextrudierte, nicht verstreckte, transparente und heißsiegelbare Polyesterfolie (AB) oder (ABC) gebildet. Sie ist zumindest zweischichtig aufgebaut. Sie besteht dann aus der Basisschicht (B) und der auf dieser durch Coextrusion aufgebrachten heißsiegelbaren Deckschicht (A). Die Deckschicht (A) ist überwiegend, d.h. zu mindestens 80 Gew.-%, aus Polyestern aufgebaut.

**Heißsiegelbare Deckschicht (A)**

***Polymere für die Deckschicht (A)***

Erfindungsgemäß umfasst die heißsiegelbare Deckschicht (A) mindestens einen Polyester und optional ein Antiblockmittel. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von 25 bis 95 Mol-%, bevorzugt 40 bis 90 Mol-%, besonders bevorzugt 50 bis 88 Mol-% enthalten. Die auf die aliphatischen Dicarbonsäuren zurückgehenden Einheiten sind in dem Polyester in einer Menge von 5 bis 75 Mol-%, bevorzugt 10 bis 60 Mol-%, besonders bevorzugt 12 bis 50 Mol-% enthalten, wobei die Mol-%-Angaben sich immer zu 100 % ergänzen. Die hierzu korrespondierenden Dioleinheiten ergeben ebenfalls immer 100 Mol-%.

Beispiele für die erfindungsgemäß einsetzbaren aromatischen Dicarbonsäuren sind die Terephthalsäure, die Isophthalsäure, die Phthalsäure und die 2,6 Naphthalindicarbonsäure.

Beispiele für aliphatische Dicarbonsäuren sind die Bernsteinsäure, die Glutarsäure, die Adipinsäure, die Pimelinsäure, die Korksäure, die Azelainsäure und die Sebazinsäure. Erfindungsgemäß bevorzugt einsetzbar sind die Adipinsäure und die Sebazinsäure, weniger bevorzugt einsetzbar sind die Bernsteinsäure, die Glutarsäure, die Adipinsäure, die Pimelinsäure, die Korksäure und die Azelainsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol, 1,4-Cyclohexandimethanol und Neopentylglykol.

In der bevorzugten Ausführungsform beinhaltet der Polyester die folgenden Dicarboxylate und Alkylene, jeweils bezogen auf die Gesamtdicarboxylat- bzw. Gesamtalkylenmenge

- 25 bis 95 Mol-%, bevorzugt 30 bis 90 Mol-% und besonders bevorzugt 40 bis 70 Mol% Terephthalat,
- 0 bis 25 Mol-%, bevorzugt 5 bis 20 Mol-% und besonders bevorzugt 10 bis 20 Mol-% Isophthalat,
- 5 bis 75 Mol -%, bevorzugt 8 bis 70 Mol-% und besonders bevorzugt 11 bis 65 Mol%, Sebazat
- 0 bis 50 Mol-%, bevorzugt 0 bis 40 Mol-% und besonders bevorzugt 0 bis 30 Mol-% Adipat
- Mehr als 30 Mol -%, bevorzugt mehr als 40 Mol-% und besonders bevorzugt mehr als 50 Mol-% Ethylen oder Butylen.

Optional enthält das Deckschichtmaterial bis zu 10 Gew.-% von einem Polymer, welches mit Polyester unverträglich ist (= anti-PET-Polymer). In einer bevorzugten Ausführungsform beträgt der Anteil an anti-PET-Polymer 1 bis 10 Gew.-% und besonders bevorzugt 2 bis 9 Gew.-%.

Bis zu 5 Gew.-% des Materials der Deckschicht (A) bestehen aus Partikeln, Additiven, Hilfsmitteln und/oder sonstigen in der Polyesterfolientechnologie üblicherweise verwendeten Zusatzstoffen.

Der Polyester für die Deckschicht (A) wird bevorzugt aus zwei physikalisch mischbaren Polyestern I und II und besonders bevorzugt aus drei physikalisch mischbaren Polyestern I, II und III hergestellt, die dem Extruder für diese Schicht (A) als Mischung zugeführt werden.

***Polyester I für die Deckschicht (A)***

Der Anteil von Polyester I in der Deckschicht (A), der aus einem oder mehreren aromatischen Dicarboxylaten und einem oder mehreren aliphatischen Alkylenen besteht, beträgt 10 bis 60 Gew.-%. In der bevorzugten Ausführungsform beträgt der Anteil von Polyester I 15 bis 55 Gew.-% und in der besonders bevorzugten Ausführungsform beträgt er 20 bis 50 Gew.-%.

Der Polyester I der erfindungsgemäßen Deckschicht (A) basiert in der bevorzugten Ausführungsform auf den folgenden Dicarboxylaten und Alkylenen, jeweils bezogen auf die Gesamtdicarboxylat- bzw. Gesamtalkylenmenge

- 60 bis 100 Mol-%, bevorzugt 62 bis 95 Mol-% und besonders bevorzugt 66 bis 93 Mol-% Terephthalat
- 0 bis 40 Mol-%, bevorzugt 5 bis 38 Mol-% und besonders bevorzugt 7 bis 34 Mol-% Isophthalat, wobei sich die Mol-%-Angaben der angeführten Dicarbonsäuren immer zu 100 % ergänzen.
- Mehr als 50 Mol-%, bevorzugt mehr als 65 Mol-% und besonders bevorzugt mehr als 80 Mol-% Ethyleneinheiten.

Ganz besonders bevorzugt sind solche Copolyester, bei denen der Anteil an Terephthalat-Einheiten 60 bis 80 Mol-%, der entsprechende Anteil an Isophthalat-Einheiten 20 bis 40 Mol- % und der Anteil an Ethyleneinheiten 100 Mol-% beträgt. D.h. es handelt sich um ein Ethylen-terephthalat- Ethylenisophthalat-Copolymer.

Eventuell vorhandene restliche Anteile stammen von anderen aromatischen Dicarbonsäuren und anderen aliphatischen Diolen, wie sie für die Basisschicht (B) als Haupt- und geeignete andere aromatische Dicarbonsäuren aufgelistet sind.

Es wurde gefunden, dass für den Fall, bei dem der Anteil an Polyester I in der Deckschicht (A) weniger als 10 Gew.-% beträgt, die Herstellbarkeit der Folie mittels Coextrusionstechnologie deutlich erschwert, bzw. nicht mehr gewährleistet ist. Die Tendenz der Folie, an bestimmten Maschinenteilen zu kleben, insbesondere an metallischen Walzen, ist dann besonders hoch. Beträgt andererseits der Anteil an Polyester I in der Deckschicht (A) mehr als 60 Gew.-%, so wird das Siegelverhalten der Folie für die vorliegende Anwendung stark beeinträchtigt. Infolge der damit verbundenen Erhöhung des Schmelzpunktes hat die Siegelschicht (A) bei den üblich angewendeten Siegeltemperaturen nicht mehr die gewünschte Weichheit, die für eine Siegelung durch Kontamination erforderlich ist.

Erfindungsgemäß ist hierbei der SV-Wert des Rohstoffes größer als 600, bevorzugt größer als 650 und besonders bevorzugt größer als 700. Ist der SV-Wert des Rohstoffes kleiner als 600, so wird die Extrudierbarkeit des Rohstoffes schlechter, was unerwünscht ist.

### Polyester II für die Deckschicht (A)

Entsprechend der bevorzugten Ausführungsform der vorliegenden Erfindung beträgt der Anteil von Polyester II in der Deckschicht (A) 20 bis 70 Gew.-%. In der bevorzugten Ausführungsform beträgt der Anteil von Polyester II 25 bis 65 Gew.-% und in der besonders bevorzugten Ausführungsform beträgt er 30 bis 60 Gew.-%.

Bevorzugt besteht der Polyester II aus einem Copolymeren aus aliphatischen und aromatischen Säurekomponenten, bei welchem die aliphatischen Säurekomponenten 20 bis 90 Mol-%, bevorzugt 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, der Terephthalsäure und der Isophthalsäure, wobei bevorzugt die Terephthalsäure und weniger bevorzugt die Isophthalsäure zu nennen sind, sowie auf der glykolischen Seite von aliphatischen, cycloaliphatischen oder aromatischen Diolen, wie sie bezüglich der Basisschicht (B) beschrieben werden.

Der Polyester II der erfindungsgemäßen Deckschicht (A) basiert zumindest auf den folgenden Dicarboxylaten und Alkylenen, jeweils bezogen auf die Gesamtdicarboxylat- bzw. Gesamtalkylenmenge

- 20 bis 70 Mol -%, bevorzugt 30 bis 65 Mol-% und besonders bevorzugt 35 bis 60 Mol-% Sebazat
- 0 bis 50 Mol-%, bevorzugt 0 bis 45 Mol-% und besonders bevorzugt 0 bis 40 Mol-% Adipat
- 10 bis 80 Mol-%, bevorzugt 20 bis 70 Mol-% und besonders bevorzugt 30 bis 60 Mol-% Terephthalat
- 0 bis 30 Mol-%, bevorzugt 3 bis 25 Mol-% und besonders bevorzugt 5 bis 20 Mol-% Isophthalat, wobei sich die Mol-%-Angaben der angeführten Dicarbonsäuren immer zu 100 % ergänzen.
- Mehr als 30 Mol-%, bevorzugt mehr als 40 Mol-% und besonders bevorzugt mehr als 50 Mol-% Ethylen oder Butylen.

In der bevorzugten Ausführungsform basiert der Polyester II der erfindungsgemäßen Deckschicht (A) basiert zumindest auf den folgenden Dicarboxylaten und Alkylenen, jeweils bezogen auf die Gesamtdicarboxylat- bzw. Gesamtalkylenmenge

- 20 bis 70 Mol -%, bevorzugt 30 bis 65 Mol-% und besonders bevorzugt 35 bis 60 Mol-% Sebazat
- 10 bis 80 Mol-%, bevorzugt 20 bis 70 Mol-% und besonders bevorzugt 30 bis 60 Mol-% Terephthalat
- 0 bis 20 Mol-%, bevorzugt 3 bis 15 Mol-% und besonders bevorzugt 3 bis 10 Mol-% Isophthalat
- Mehr als 30 Mol-%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie für die Basisschicht (B) aufgelistet sind.

Durch das Vorhandensein von mindestens 10 Mol-% aromatischer Dicarbonsäure wird gewährleistet, dass das Polymer II ohne Verklebungen z.B. im Coextruder verarbeitbar ist.

Beträgt der Anteil von Polyester II in der Deckschicht (A) weniger als 20 Gew.-%, so wird das Siegelverhalten der Folie stark beeinträchtigt. Die Siegelschicht hat dann - wie bereits oben beschrieben - bei den üblichen Siegeltemperaturen nicht mehr die gewünschte Weichheit, die für eine gute Siegelung durch Kontamination erforderlich ist. Beträgt demgegenüber der Anteil an Polyester II in der Deckschicht (A) mehr als 70 Gew.-%, so wird die Herstellbarkeit der Folie über die Coextrusionstechnologie erschwert, bzw. sie ist nicht mehr gewährleistet. Die Tendenz der Folie an bestimmten Maschinenteilen zu kleben, insbesondere an metallischen Walzen, ist hier besonders hoch.

Erfindungsgemäß ist hierbei der SV-Wert des Rohstoffes größer als 900, bevorzugt größer als 950 und besonders bevorzugt größer als 1000. Ist der SV-Wert des Rohstoffes kleiner als 900, so wird die Trübung der Folie höher, was unerwünscht ist.

### Optionaler Polyester III für die Deckschicht (A)

Der Anteil von Polyester III, der aus einem oder mehreren aromatischen Dicarboxylaten und einem oder mehreren aliphatischen Alkylenen besteht, beträgt in der Deckschicht (A) 0 bis 15 Gew.-% und ist optional. In der bevorzugten Ausführungsform beträgt der Anteil des Polyesters III in der Deckschicht (A) 3 bis 12 Gew.-% und in der besonders bevorzugten Ausführungsform beträgt er 4 bis 10 Gew.-%.

Im Allgemeinen basiert der Polyester III der erfindungsgemäßen Deckschicht (A) auf den folgenden Dicarboxylaten und Alkylenen, jeweils bezogen auf die Gesamtdicarboxylat- bzw. Gesamtalkylenmenge

- 80 bis 98 Mol-%, bevorzugt 82 bis 96 Mol-% und besonders bevorzugt 74 bis 95 Mol-% Terephthalat
- 2 bis 20 Mol-%, bevorzugt 4 bis 18 Mol-% und besonders bevorzugt 5 bis 17 Mol-% Isophthalat
- Mehr als 50 Mol-%, bevorzugt mehr als 65 Mol-% und besonders bevorzugt mehr als 80 Mol-% Ethyleneinheiten.

Eventuell vorhandene restliche polymere Anteile stammen von anderen aromatischen Dicarbonsäuren und anderen aliphatischen Diolen, wie sie für die Basisschicht (B) als Haupt-und geeignete andere aromatische Dicarbonsäuren aufgelistet sind.

Bei der Mischung der Polyester I, II und III ist darauf zu achten, dass sich die Anteile in Gew.-% zu 100 addieren.

Ganz besonders bevorzugt sind solche Copolyester, bei denen der Anteil an Terephthalat-Einheiten 84 bis 94 Mol-%, der entsprechende Anteil an Isophthalat-Einheiten 6 bis 16 Mol-% (wobei die Dicarboxylatanteile sich wiederum zu 100 Mol-% ergänzen) und der Anteil an Ethyleneinheiten 100 Mol-% beträgt. D.h. es handelt sich wiederum um ein Polyethylenterephthalat/isophthalat.

In einer besonders bevorzugen Ausführungsform enthält der Polyester III ein geeignetes Antiblockmittel (siehe weiter unten) in einem Anteil von 5 bis 25 Gew.-%. In dieser besonders bevorzugten Ausführungsform handelt es sich bei Polyester III um ein Masterbatch, das vorzugsweise über die Extrusionstechnologie hergestellt wird. Das Antiblockmittel wird in diesem Fall bei der Extrusion (vorzugsweise Zweischneckenextruder) in deutlich höherer Konzentration dem Polyesterrohstoff zugegeben, als es nachher in der Folie vorhanden ist. Erfindungsgemäß ist hierbei der SV-Wert des Masterbatchs größer als 400, bevorzugt größer als 425 und besonders bevorzugt größer als 450.

Bevorzugt enthält die Deckschicht (A) eine Mischung aus den Polyestern I, II und III. Gegenüber der Verwendung von nur einem Polyester mit vergleichbaren Komponenten und vergleichbaren Anteilen der Komponenten weist eine solche Mischung die folgenden Vorteile auf

- die Mischung der Polyester I, II und III ist von den jeweiligen Glasübergangstemperaturen (Tg) gesehen leichter zu extrudieren als ein einzelner Rohstoff mit vergleichbarer Konzentration der jeweiligen Polymerkomponenten. Untersuchungen haben gezeigt, dass eine Mischung aus Polymeren mit hohem Tg (Polyester I und III) und einem Polymeren mit niedrigem Tg (Polyester II) weniger zum Verkleben im Coextruder neigt als ein einziges Polymer mit einem entsprechenden mittleren Tg.
- mit der Mischung können praktisch gesehen die gewünschten Siegeleigenschaften individueller eingestellt werden als bei Einsatz eines einzigen Polyesters
- Ein weiterer Vorteil ist, dass man die Tg (bzgl. der gesamten Deckschicht) besser/leichter einstellen kann
- Insbesondere die Zugabe von Partikeln gestaltet sich bei Polyester III einfacher als bei Polyester I oder II.

Zweckmäßigerweise beträgt die Glasübergangstemperatur von Polyester I und III mehr als 50 °C. Bevorzugt beträgt die Glasübergangstemperatur von Polyester I und III mehr als 55 °C und besonders bevorzugt mehr als 60 °C. Ist die Glasübergangstemperatur von Polyester I und III kleiner als 50 °C, kann die Folie nicht verfahrenssicher hergestellt werden. Die Klebeneigung der Deckschicht (A) z.B. gegenüber Walzen ist dabei so groß, dass mit häufigen Folienabrissen gerechnet werden muss.

Zweckmäßigerweise beträgt die Glasübergangstemperatur von Polyester II weniger als 10 °C. Bevorzugt beträgt die Glasübergangstemperatur weniger als 8 °C und besonders bevorzugt weniger als 6 °C. Ist die Glasübergangstemperatur von Polyester II größer als 10 °C, so hat die Siegelschicht bei den üblichen Siegeltemperaturen nicht mehr die gewünschte Weichheit, wie sie für eine Siegelung durch Kontamination erforderlich ist.

Im Hinblick auf die Polymere für die Deckschicht (A) ist es erfindungsgemäß günstig, wenn die Tg der gesamten Deckschicht (A) in einem Bereich liegt, der kleiner ist 60°C, bevorzugt kleiner 55 °C und besonders bevorzugt kleiner als 50 °C ist. Die Weichheit der Deckschicht (A) ist dann besonders hoch.

### Anti PET-Polymer in der Deckschicht (A)

Optional enthält die heißsiegelbare Deckschicht (A) ein mit Polyester unverträgliches Polymer (anti-PET-Polymer) in einer bestimmten Konzentration. Der Anteil des anti-PET-Polymers beträgt 0 bis 10 Gew.-%, bezogen auf die Masse der Deckschicht (A). In einer bevorzugten Ausführungsform beträgt der Anteil des anti-PET-Polymers 3 bis 10 Gew.-% und in der besonders bevorzugten Ausführungsform beträgt er 5 bis 10 Gew.-%, ebenfalls bezogen auf die Masse der Deckschicht (A).

Beispiele für geeignete anti-PET-Polymere (anti-PET-Polymer) sind Polymere auf Basis von Ethylen (LLDPE, HDPE), Propylen (PP), Cycloolefinen (CO), Amiden (PA) oder Styrol (PS). In einer bevorzugten Ausführungsform wird als anti-PET-Polymeres ein Copolymeres verwendet. Beispiele hierfür sind Copolymere auf Basis von Ethylen (C2/C3, C2/C3/C4-Copolymere), Propylen (C2/C3, C2/C3/C4- Copolymere) oder auf Basis von Cycloolefinen (Norbornen/Ethylen-, Tetracyclododecen/Ethylen-Copolymere). In einer der besonders bevorzugten Ausführungsformen ist das mit Polyester unverträgliche Polymer ein Cycloolefincopolymer (COC). Solche Cycloolefincopolymere sind beispielsweise in der EP-A 1 068 949 oder in der JP 05-009319 beschrieben, auf die hier ausdrücklich Bezug genommen wird.

Unter den Cycloolefincopolymeren (COC) sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere, die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die COC's weisen im Allgemeinen Glasübergangstemperaturen zwischen —20 und 400 °C auf. Für die Erfindung sind solche COC's geeignet, die eine Glasübergangstemperatur von kleiner als 120 °C, bevorzugt kleiner als 100 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135°C, DIN 53 728) liegt zweckmäßigerweise zwischen 0,1 und 200 ml/g, bevorzugt zwischen 50 und 150 ml/g.

Folien, die ein COC mit einer Glasübergangstemperatur von kleiner als 80 °C enthalten, zeichnen sich gegenüber solche, die ein COC mit einer Glasübergangstemperatur von größer 80° C enthalten, durch eine niedrigere Trübung und durch eine verbesserte Siegelbarkeit aus.

Die EP-A-0 283 164, EP-A-0 407 870, EP-A-0 485 893 und EP-A-0 503 422 beschreiben die Herstellung von COC's mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z.B. Topas® (Ticona, Frankfurt).

Die Zugabe des anti-PET-Polymers begünstigt die Siegelung und das Verarbeitungsverhalten, hier insbesondere die Wicklung der erfindungsgemäßen Folie. Beträgt der Anteil des COC's in der bevorzugten Ausführungsform weniger als 3 Gew.-%, so ist ein positiver Einfluss des Polymeren auf die Siegelung und das Verarbeitungsverhalten der Menüschale nicht mehr gegeben. Die Menüschale neigt zum Verblocken. Andererseits sollte der Anteil von polyesterunverträglichem Polymer 10 Gew.-% nicht überschreiten, da die Trübung der Folie sonst zu hoch wird.

### Antiblockmittel in der Deckschicht (A)

Zur weiteren Verbesserung der Verarbeitbarkeit der Folie hat es sich als günstig erwiesen, die heißsiegelbare Deckschicht (A) weiter zu modifizieren. Dies geschieht am besten mit Hilfe von geeigneten Antiblockmitteln, die der Siegelschicht in Form von Polyesterrohstoff III (gleichbedeutend mit Antiblockmasterbatch) zugegeben werden, und zwar in Mengen, dass ein Verblocken der Folie verhindert und das Verarbeitungsverhalten der Folie optimiert wird.

Für eine gute Verarbeitbarkeit der Folie hat es sich als besonders vorteilhaft erwiesen, Teilchen mit einem mittleren Partikeldurchmesser $d_{50}$ von 2,0 bis 8,0 $\mu$m, bevorzugt von 2,5 bis 7,5 $\mu$m und besonders bevorzugt von 3,0 bis 7,0 $\mu$m zu verwenden. Bei der Verwendung von Teilchen mit einem Durchmesser von unterhalb 2,0 $\mu$m, ist ein positiver Einfluss der Partikel auf das Verarbeitungsverhalten der Folie nicht mehr gegeben. Die Folie neigt bei zum Verblocken, was unerwünscht ist. Teilchen mit einem Durchmesser von größer als 8,0 $\mu$m verursachen in der Regel eine zu hohe Trübung, sowie Filterprobleme.

Weiterhin hat es sich als günstig erwiesen, wenn die heißsiegelbare Deckschicht (A) Partikel in einer Konzentration bis zu 0,5 Gew.-%, bevorzugt von 0,01 bis 0,4 Gew.-% und besonders bevorzugt von 0,01 bis 0,35 Gew.-% enthält. Enthält die Deckschicht (A) Partikel in einer Konzentration von mehr als 0,5 Gew.-%, so wird die Trübung der Folie zu groß.

Erfindungsgemäß bevorzugte Partikel sind synthetisch hergestellte, amorphe $SiO_2$-Partikel in kolloidaler Form, die hervorragend in die Polymermatrix eingebunden werden. Zur Herstellung der $SiO_2$-Partikel wird auf den Stand der Technik verwiesen; das Verfahren ist z.B. in der EP 1 475 228 B1 ausführlich offenbart.

Typische andere Partikel, die in der Deckschicht (A) verwendet werden können, sind anorganische und/oder organische Partikel, beispielsweise Calciumcarbonat, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid oder Kaolin.

### Dicke der Deckschicht (A)

Erfindungsgemäß weist die heißsiegelbare Deckschicht (A) eine Dicke von 10 bis 100 $\mu$m auf. Ist die Dicke der Deckschicht (A) geringer als 10 $\mu$m, so ist die Siegelung der Folie nicht ausreichend. Ist die Deckschichtdicke größer als 100 $\mu$m, so neigt die Folie zum Verblocken, was unerwünscht ist.

Die Deckschicht (A) zeigt sehr gute Siegeleigenschaften gegen sich selbst (FIN-Siegelung, Deckschicht (A) gegen Deckschicht (A) gesiegelt). Nach einer Heißsiegelung bei 150 °C (460 N, 2 s) ist die Siegelnahtfestigkeit der Deckschicht (A) gegen sich selbst (FIN-Siegelung) größer als 3 N/15 mm und beträgt max. 10 N/15 mm.

In ganz überraschender Weise wird bei Einhalten der erfindungsgemäßen Deckschichtrezeptur in allen Fällen eine dauerhaft feste Siegelung erzielt, auch für den Fall, bei dem die Folie mit Fleischsaft oder dergleichen kontaminiert ist.

### Basisschicht (B)

### Verwendete Polymere für die Basisschicht (B)

Die Basisschicht (B) der Folie besteht zu mindestens zu 90 Gew.-% aus einem thermoplastischen Polyester, der aus Dicarbonsäure- und aus Diol-abgeleiteten Einheiten, bzw. Dicarboxylaten und Alkylenen aufgebaut ist und im Allgemeinen die folgenden Dicarboxylate und Alkylene, jeweils bezogen auf die Gesamtdicarboxylat- bzw. Gesamtalkylenmenge, beinhaltet (= Hauptcarbonsäuren)

- mehr als 90 Mol-%, bevorzugt mehr als 92 Mol-% Terephthalat
- weniger als 10 Mol-%, bevorzugt weniger als 8 Mol-% Isophthalat oder 2,6-Naphthalat
- mehr als 90 Mol-%, bevorzugt mehr als 95 Mol-% an Ethylen.

Geeignete andere zur Bildung des Polyesters geeignete aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$steht.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Besonders vorteilhaft ist es, wenn in der Basisschicht (B) ein Copolyester auf Basis von Terephthalat und geringen Mengen (< 5 Mol-%) Isophthalat oder auf Basis von Terephthalat und geringen Mengen (< 5 Mol-%) 2,6-Naphthalat verwendet wird. In diesem Fall sind die Herstellbarkeit und die optischen Eigenschaften der Folie besonders gut. Die Basisschicht (B) enthält dann im Wesentlichen ein Polyestercopolymeres, das überwiegend aus Terephthalsäure und Isophthalsäure -Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester für die Basisschicht (B) kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan, Aluminium oder Germanium-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die Polyesterfolie ist damit antimonfrei. Angestrebt wird im besonders bevorzugten Fall eine Polyesterfolie, die kein Antimon enthält und somit in Verpackungsanwendungen, bei denen die Folie in direktem Lebensmittelkontakt steht, eingesetzt werden kann.

Um das Verarbeitungsverhalten der Folie nach der vorliegenden Erfindung weiterhin zu verbessern, ist es von Vorteil, in die Basisschicht (B) bei einem zweischichtigen Folienaufbau (AB), bzw. in die nicht siegelfähige Deckschicht (C) bei einem dreischichtigen Folienaufbau (ABC) ebenfalls Partikel einzuarbeiten, wobei die folgenden Bedingungen eingehalten werden sollten

• Die Partikel sollten einen mittleren Partikeldurchmesser $d_{50}$ von 2 bis 8 $\mu$m aufweisen. Es hat sich dabei als besonders zweckmäßig erwiesen, Teilchen mit einem mittleren Partikeldurchmesser $d_{50}$ von 2,5 bis 7,5 $\mu$m und besonders bevorzugt von 3 bis 7 $\mu$m zu verwenden.3

• Die Partikel sollten in einer Konzentration von bis zu 0,5 Gew.-% vorhanden sein. Bevorzugt beträgt die Konzentration der Partikel 0,01 bis 0,4 Gew.-% und besonders bevorzugt 0,1 bis 0,35 Gew.-%.

Zur Erzielung der vorgenannten Eigenschaften, insbesondere der optischen Eigenschaften der Folie hat es sich insbesondere bei einer dreischichtigen Folie mit ABC -Aufbau als zweckmäßig erwiesen, die Menge an Partikeln in der Basisschicht (B) niedriger einzustellen als in der Deckschicht (C). Bei der dreischichtigen Folie vom genannten Typ soll zweckmäßiger Weise in der Basisschicht (B) die Menge der Partikel zwischen 0 und 0,2 Gew.-% liegen, vorzugsweise zwischen 0 und 0,15 Gew.-%, insbesondere zwischen 0 und 0,1 Gew.-%. Als besonders zweckmäßig hat es sich erwiesen, in die Basisschicht nur Partikel einzuarbeiten, wie sie über das arteigene Regenerat (Rezyclat) in die Folie gelangen. In diesem Fall können die gewünschten optischen Eigenschaften der Folie, insbesondere die Trübung der Folie, gut erreicht werden.

Die Dicke der anderen, nicht siegelbaren Deckschicht (C), kann gleich der Deckschicht (A) sein oder von dieser verschieden; ihre Dicke liegt im Allgemeinen zwischen 10 und 50 $\mu$m.

Die Basisschicht (B) kann weiterhin zusätzlich übliche Additive wie beispielsweise Stabilisatoren (UV, Hydrolyse, Thermo) oder weitere Füller (z.B. Farbpigmente), in den vom Hersteller empfohlenen Konzentrationen enthalten. Diese Additive werden zweckmäßig dem Polymer bzw. der Polymermischung bereits vor dem Aufschmelzen zugesetzt.

Die Basisschicht (B) enthält zusätzlich Regenerat (Folienabfall, wie Säumer oder Anfahrmaterial, "skeletal waste"), das bei der Herstellung der Folie in einer Menge von bis zu 60 Gew.-% der Extrusion zugeführt wird, ohne dass dabei die physikalischen, insbesondere aber die optischen Eigenschaften der Folie negativ beeinflusst werden.

**Aufbau der Folie**

Die erfindungsgemäße heißsiegelbare Folie kann zwei- oder dreischichtig aufgebaut sein. Zur Erzielung der vorgenannten Eigenschaften, insbesondere der geforderten optischen Eigenschaften hat sich ein dreischichtiger Aufbau der Folie mit den Schichten (ABC) als günstig erwiesen. Die erfindungsgemäße Folie umfasst dann die Basisschicht (B), die heißsiegelbare Deckschicht (A) auf der einen Seite der Basisschicht (B) und die Deckschicht (C) auf der anderen Seite der Basisschicht (B).

**Dicke der Folie**

Die Gesamtdicke der erfindungsgemäßen Polyesterfolie kann innerhalb bestimmter Grenzen variieren. Sie beträgt 100 bis 1500 $\mu$m, bevorzugt 110 bis 1300 $\mu$m und besonders bevorzugt 120 bis 1100 $\mu$m, wobei die Dicke der Basisschicht mindestens 65 % beträgt. Ist die Dicke der Folie geringer als 100 $\mu$m, so sind die Mechanik und die Barriereeigenschaften der Folie nicht ausreichend. Ist die Dicke der Folie größer als 1500 $\mu$m, so verschlechtert sich die Siegelzeit der Folie und außerdem wird die Herstellung der Folie unwirtschaftlich, was beides unerwünscht ist.

**Verfahren zur Herstellung der Folie**

Die Erfindung betrifft daneben ein Verfahren zur Herstellung der erfindungsgemäßen thermoformbaren Polyesterfolie nach dem bekannten Coextrusionsverfahren. Im Rahmen dieses Verfahrens wird so vorgegangen, dass die den einzelnen Schichten (AB) und, falls vorhanden, (C) der Folie entsprechenden Schmelzen durch eine Flachdüse coextrudiert werden, die so erhaltene Folie zur Verfestigung auf einer oder mehreren Walzen abgezogen wird und anschließend aufgerollt wird. Erfindungsgemäß wird die Folie dabei so abgekühlt, dass die Folie im Wesentlichen amorph ist.

## Erfindungsgemäßen Eigenschaften

Die erfindungsgemäße heißsiegelbare und thermoformbare Polyesterfolie, hergestellt nach dem erfindungsgemäßen Verfahren, besitzt eine Reihe von Eigenschaften, von denen untenstehend die wichtigsten aufgeführt sind.

Die Trübung der heißsiegelbaren Polyesterfolie ist kleiner als 10 %. Bevorzugt beträgt die Trübung der Polyesterfolie weniger als 9 % und besonders bevorzugt weniger als 8 %.

Die Clarity der heißsiegelbaren Polyesterfolie ist größer als 80 %. Bevorzugt beträgt die Clarity der Polyesterfolie mehr als 82 % und besonders bevorzugt mehr als 84 %.

Der Glanz der heißsiegelbaren Polyesterfolie ist größer als 100, in der bevorzugten Ausführungsform größer als 110 und in der besonders bevorzugten Ausführungsform größer als 120.

Die Transparenz der heißsiegelbaren Polyesterfolie ist größer als 89. Bevorzugt beträgt die Transparenz mehr als 90 und besonders bevorzugt mehr als 90,5.

Die erfindungsgemäße Polyesterfolie zeigt sehr gute Siegeleigenschaften, Nach der Siegelung bei 150 °C (460 N, 2 s) ist die Siegelnahtfestigkeit der Deckschicht (A) gegen sich selbst (FIN-Siegelung) größer als 3 N/15 mm und beträgt max. 10 N/15 mm.

In allen Fällen wird dabei eine gegen die Deckelfolie dauerhaft feste Siegelung erzielt, auch wenn die Deckschicht (A) z.B. mit Fleischsaft kontaminiert ist.

Die Polyesterfolie eignet sich hervorragend zum Verpacken von Nahrungs- und Genussmitteln, insbesondere zur Verpackung von Nahrungs- und Genussmitteln in Menüschalen, bei denen heißsiegelbare Polyesterfolien zum Verschließen der Verpackung verwendet werden.

Die Polyesterfolie zeichnet sich daneben durch ein sehr gutes Wickelverhalten aus.

Die Verwendung der Folie ist besonders zur Herstellung von Verpackungen geeignet, bei der Siegelnahtfestigkeit zwischen der Deckschicht (A) und einer geeigneter Deckelfolie im Bereich von 3 bis 10 N/15mm beträgt.

Die Tabelle 1 fasst u.a. die wichtigsten erfindungsgemäßen Folieneigenschaften zusammen.

*Tabelle 1*

| Deckschicht (A) | Erfindungsgemäßer Bereich | Bevorzugt | Besonders bevorzugt | Einheit | Messmethode |
|---|---|---|---|---|---|
| Anteil Einheiten im Polyester, aufgebaut auf **aromatischen** Dicarbonsäuren | 25 bis 95 | 40 bis 90 | 50 bis 88 | Mol-% | |
| Anteil Einheiten im Polyester, aufgebaut auf **aliphatischen** Dicarbonsäuren | 5 bis 75 | 10 bis 60 | 12 bis 50 | Mol-% | |
| Polyester I (aromatisch) | 10 bis 60 | 15 bis 55 | 20 bis 50 | Gew.-% | |
| Polyester II (aliphatisch-aromatisch) | 20 bis 70 | 25 bis 65 | 30 bis 60 | Gew.-% | |
| Polyester III (aromatisch) | 0 bis 15 | 3 bis12 | 4 bis 10 | Gew.-% | |
| Anti-PET-Polymer | 0 bis 10 | 3 bis 10 | 5 bis 10 | Gew.-% | |
| Partikeldurchmesser $d_{50}$ | 2 bis 8 | 2,5 bis 7,5 | 3,0 bis 7 | µm | intern |
| Füllstoffkonzentration | bis 0,5 | 0,01 bis 0,4 | 0,01 bis 0,35 | Gew.-% | intern |
| Dicke der Deckschicht (A) | 10 bis 100 | | | µm | intern |
| **Eigenschaften Folie** | | | | | |
| Dicke der Folie | 100 bis 1500 | 110 bis 1300 | 120 bis 1100 | µm | |
| FIN-Siegelung (150°C, 460 N, 2 s) | 3 bis 10 | 3,2 bis 10 | 3,5 bis 10 | N/15 mm | intern |
| Trübung der Folie | < 10 | < 9 | < 8 | % | ASTM D 1003-52 |
| Clarity der Folie | >= 80 | >= 82 | >= 84 | % | ASTM D 1003-51 |
| Glanz der Folie | > 100 | > 110 | > 120 | | DIN 67530 |

## Definitionen und Vereinbarungen

Unter heißsiegelbar wird allgemein die Eigenschaft einer mehrschichtigen, mindestens eine Basisschicht (B) enthaltenden Polyesterfolie verstanden, die zumindest eine heißsiegelbare Deckschicht (A) enthält. Die heißsiegelbare Deckschicht (A) wird mittels Siegelbacken durch Anwendung von Wärme (z.B. 110 bis 220 °C) und Druck/Druckkraft (1 bis 6 bar, bzw. 200 bis 1000 N) in einer bestimmten Zeit (0,1 bis 4 sec) mit einem Substrat aus thermoplastischem Kunststoff, z.B. Menüschalen aus a-PET, verbunden, ohne dass dabei die Basisschicht (B) selbst plastisch wird. Um dies zu erreichen, besitzt das Polymere der Deckschicht (A) im Allgemeinen einen deutlich niedrigeren Schmelz- oder Erweichungspunkt als das Polymere der Basisschicht. Wird als Polymeres für die Basisschicht beispielsweise Polyethylenterephthalat mit einem Schmelzpunkt von 254 °C (c-PET) verwendet, so beträgt der Schmelzpunkt der heißsiegelbaren Deckschicht (A) im Allgemeinen deutlich weniger als 200 °C.

Zur Charakterisierung der Rohstoffe und der Folien wurden im Rahmen der vorliegenden Erfindung die folgenden Messmethoden benutzt.

## Messmethoden

### Trübung, Clarity und Transparenz

Die Messung an den Polyesterfolien erfolgt am Hazegard Hazemeter XL-211 der Fa. BYK Gardner. Die Trübung nach Hölz wurde nach ASTM-D 1003-61, Methode A, bestimmt. Die Messung der Clarity geschieht nach ASTM-D 1003 mittels Hazeguard, jedoch jetzt am "clarity port" des Messgerätes. Die Messung der Transparenz geschieht nach ASTM-D 1033-61, Methode A. Die Messungen werden sämtlich direkt nach Herstellung an der Folie durchgeführt.

### Glanz 20°

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird ein Einstrahlwinkel von 20 ° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

### Standardviskosität SV

Die Standardviskosität in verdünnter Lösung SV wurde, angelehnt an DIN 53 728 Teil 3, in einem Ubbelohde Viskosimeter bei $(25 \pm 0{,}05)\,°C$ gemessen. Dichloressigsäure (DCE) wurde als Lösemittel verwendet. Die Konzentration des gelösten Polymers betrug 1 g Polymer / 100 mL reines Lösemittels. Die Auflösung des Polymers erfolgte 1 Stunde bei 60 °C. Wurden die Proben nach dieser Zeit nicht vollständig gelöst, wurden noch bis zwei Auflösungsversuche jeweils 40 Min bei 80 °C durchgeführt und die Lösungen anschließend 1 Stunde bei einer Drehzahl von 4100 $min^{-1}$ zentrifugiert.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert, D.h.:

$$Einwaage = \frac{(Einwaage\ entsprechend\ 100\ \%\ Polymer)}{[(100 - Partikelgehalt\ in\ Gew.\text{-}\%)\cdot 0{,}01]}$$

### Mittlerer Partikeldurchmessers $d_{50}$

Die Bestimmung des mittleren Durchmessers $d_{50}$ wird mittels Malvern Master Sizer 2000 am einzusetzenden Partikel durchgeführt. Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$- Wert wird dabei definitionsgemäß aus der Summenkurve der Partikelgrößenverteilung bestimmt: Der Schnittpunkt des 50 % Ordinatenwertes mit der Summenkurve liefert auf der Abszissenachse den gewünschten $d_{50}$-Wert.

Messungen an der mittels dieser Partikel hergestellten Folie ergeben einen um 15 - 25 % niedrigeren $d_{50}$ Wert als die eingesetzten Partikel.

### Siegelnahtfestigkeit (DIN 55529)

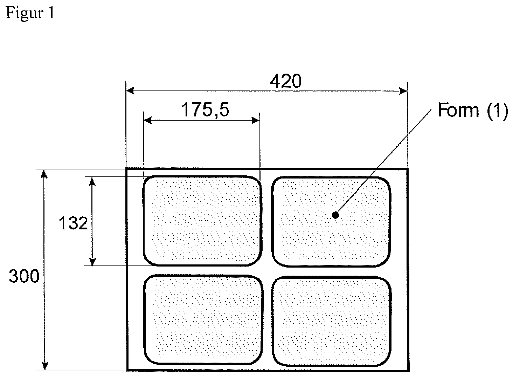

Die Messung der FIN-Siegelnahtfestigkeit erfolgte aus Gründen Messbarkeit und Durchführbarkeit nicht direkt an der erfindungsgemäßen Folie mit der Siegelschicht (A), sondern an 15 mm breiten Folienstreifen, die aus den Seitenwänden einer thermogeformten Schale herausgeschnitten wurden. Die thermoformbare Polyesterfolie wurde dazu in eine Multivac-Maschine (R 245/SN:166619) eingespannt und unter den Formbedingungen (Formtemperaturen 150 °C, Zeit Anheizen: 2 — 3 s, Explosionsverformung / Druckluftspeicher 2 bar, Formdruck 2 bar getestet, Formen: 2 s) tiefgezogen. Die eingestellten Formate für die herzustellenden Schalen sind der Figur 1 zu entnehmen. Der Tiefzug betrug 70 mm.

Die Messung der FIN-Siegelnahtfestigkeit erfolgte gemäß DIN 55529 (2005-09). Dazu wurden zwei 15 mm breite Folienstreifen aus den Seitenwänden einer thermogeformten Schale herausgeschnitten (Herstellung siehe oben), die Siegelschichten (A) aufeinander gelegt und bei 150 °C, einer Zeit von 2 s und einem "Siegeldruck" von 460 N (Gerät: Brugger Typ NDS, einseitig beheizte Siegelbacke) zusammengepresst. Um das Kleben an der Siegelbacke zu vermeiden, wurde eine 12 $\mu$m dicke kristalline Polyesterfolie zwischen der erfindungsgemäßen Folie und der Siegelbacke gelegt. Die Siegelnahtfestigkeit (Höchstkraft) wurde unter einem Abzugswinkel von 90 ° (90 °-Peel-Methode) mit einer Geschwindigkeit von 200 mm/min bestimmt.

**Beispiel 1**

**I Herstellung der thermoformbaren Polyesterfolie**

Zur Herstellung der thermoformbaren und heißsiegelbaren Polyesterfolie wurden für die jeweiligen coextrudierten Schichten (ABC) folgende Ausgangsmaterialien verwendet

### Deckschicht (A), Mischung aus

| | |
|---|---|
| 60,0 Gew.-% | Polyester I (Copolymeres aus 78 Mol-% Ethylenterephthalat, 22 Mol-% Ethylenisophthalat) mit einem SV-Wert von 850. Die $T_g$ von Polyester I beträgt ca. 75°C. |
| 40 Gew.-% | Polyester II (= Copolymeres enthaltend 40 Mol-% Ethylensebazat, 60 Mol-% Ethylentherephthalat) mit einem SV-Wert von 1100. Die $T_g$ von Polyester II beträgt ca. -2 °C. |

### Basisschicht (B)

| | |
|---|---|
| 100 Gew.-% | Copolyester, der aus 95 mol-% Terephthalat- und 5 mol-% Isophthalat-Einheiten und aus 100 mol-% Ethylenglykol-Einheiten aufgebaut sind, mit einem SV-Wert von 800 |

### Deckschicht (C)

| | |
|---|---|
| 95 Gew.-% | Copolyester, der aus 95 mol-% Terephthalat- und 5 mol-% Isophthalat-Einheiten und aus 100 mol-% Ethylenglykol-Einheiten aufgebaut sind, mit einem SV-Wert von 800 |
| 5 Gew.-% | 98,5 Gew.-% Polyethylenterephthalat und 1,5 Gew.-% Sylobloc 46 |
| **Dicke der Folie** | 300 $\mu$m |
| **Deckschichtdicke (A)** | 50 $\mu$m |

Die o.g. Rohstoffe wurden in je einem Extruder pro Schicht aufgeschmolzen und durch eine dreischichtige Breitschlitzdüse mit ABC-Aufbau auf eine gekühlte Abzugswalze extrudiert. Die so erhaltene amorphe Folie wurde gesäumt und dann aufgerollt.

Die Herstellungsbedingungen in den einzelnen Verfahrensschritten waren

| Extrusion | Temperaturen für die Schmelzen (ABC) | 270 | °C |
|---|---|---|---|
| | Temperatur der Abzugswalze | 20 | °C |
| | Verweilzeit der Folie auf der Abzugswalze | 15 | s |

In der Tabelle 2 sind die Zusammensetzung der Folie, sowie weitere Informationen zur erfindungsgemäßen Folie, insbesondere zu den Eigenschaften der erfindungsgemäßen Folie, dargestellt.

**II Heißsiegelbare Deckelfolie**

Zur Herstellung der heißsiegelbaren Deckelfolie wurde das Beispiel 3 der EP 1 138 480 B1 nachgearbeitet.

**III Herstellung der Verpackung**

Die thermoformbare Polyesterfolie und die heißsiegelbare Deckelfolie wurden jeweils für sich in eine Multivac-Maschine (R 245/SN:166619) eingespannt. Die thermoformbare Polyesterfolie wurde unter den Formbedingungen (Formtemperaturen 150 °C, Zeit Anheizen: 2 - 3 s, Explosionsverformung / Druckluftspeicher 2 bar, Formdruck 2 bar getestet, Formen: 2 s) tiefgezogen. Die eingestellten Formate für die herzustellenden Schalen sind der Figur **1** zu entnehmen. Der Tiefzug betrug 70 mm.

Die Form wurde abgekühlt und die thermogeformte Folie aus der Form ausgestoßen. Portionen von Schweinefleisch (etwa 1000 g) wurden in den Hohlraum gelegt und die Deckelfolie auf die Oberseite der Menüschale gebracht. Dabei wurde die Deckelfolie so auf die Menüschale gebracht, dass die heißsiegelbare Oberfläche (A') der Oberfolie in Kontakt mit der Portion Fleisch und der Siegelfläche der Menüschale war. Die Heißversiegelung wurde auf der gleichen Maschine bei einer Temperatur von 160 °C, 2 s bei einem Druck von 2 bar durchgeführt. Die Siegelung war fest und dauerhaft.

**Beispiel 2**

Im Vergleich zu Beispiel 1 wurde zur Herstellung der thermoformbaren und siegelfähigen Polyesterfolie nur die Rezeptur der Deckschicht (A) geändert, alles andere wurde gleichgehalten.

**Deckschicht (A), Mischung aus**

| | |
|---|---|
| 40,0 Gew.-% | Polyester I (Copolymeres aus 78 Mol-% Ethylenterephthalat, 22 Mol-% Ethylenisophthalat) mit einem SV-Wert von 850. Die $T_g$ von Polyester I beträgt ca. 75°C. |
| 60 Gew.-% | Polyester II (= Copolymeres enthaltend 40 Mol-% Ethylensebazat, 60 Mol-% Ethylentherephthalat) mit einem SV-Wert von 1000. Die $T_g$ von Polyester II beträgt ca. -2 °C. |

**Beispiel 3**

Im Vergleich zu Beispiel 1 wurde zur Herstellung der thermoformbaren und siegelfähigen Polyesterfolie nur die Rezeptur der Deckschicht (A) geändert, alles andere wurde gleichgehalten.

**Deckschicht (A), Mischung aus**

| | |
|---|---|
| 46 Gew.-% | Polyester I (Copolymeres aus 67 Mol-% Ethylenterephthalat, 33 Mol-% Ethylenisophthalat) mit einem SV-Wert von 850. Die $T_g$ von Polyester I beträgt ca. 75°C. |
| 49 Gew.-% | Polyester II (= Copolymeres enthaltend 40 Mol-% Ethylensebazat, 60 Mol-% Ethylentherephthalat) mit einem SV-Wert von 1000. Die $T_g$ von Polyester II beträgt ca. -2 °C. |
| 5,0 Gew.-% | Polyester III (Copolymeres aus 89 Mol-% Ethylenterephthalat, 11 Mol-% Ethylenisophthalat) mit einem SV-Wert von 850 und 15 Gew.-% Sylobloc 43 mit einem $d_{50}$ von 3,9 $\mu$m. Die $T_g$ von Polyester III beträgt ca. 75°C. |

**Vergleichsbeispiel 1**

Im Vergleich zu Beispiel 1 wurde zur Herstellung der thermoformbaren Polyesterfolie ein Standardpolyester gewählt (= a-PET), der mit einem Antiblockmittel ausgestattet ist. Alle weiteren Punkte (z.B. Verfahren, Packungsherstellung) unterscheiden sich nicht zu Beispiel 1.

**Folienaufbau**

| | |
|---|---|
| 95 Gew.-% | Polyethylenterephthalat |
| 5 Gew.-% | 85 Gew.-% Polyethylenterephthalat und 15 Gew.-% Sylobloc 43 |
| **Dicke der Folie** | 300 $\mu$m |

Die Packung ist nicht für die Siegelung durch Kontamination geeignet.

## Tabelle 2 – thermoformbare Folie

| | | Zusammensetzung Polyester I | | | Zusammensetzung Polyester II | | | | Zusammensetzung Polyester III | | | AntiPET-Polymer | Verhältnisse PI/PII/PIII AntiPET-Polymer | Glastemperaturen PI/PII/PIII AntiPET-Polymer | Folienaufbau | Folien-dicke | Deckschicht-Dicken | | Antiblockmittel | | Siegelnahtfestigkeit-FIN | Trübung | Glanz |
|---|---|---|---|---|---|---|---|---|---|---|---|---|---|---|---|---|---|---|---|---|---|---|
| | | TS | IS | EG | SeS | TS | IS | EG | TS | IS | EG | COC | Polymer | °C | | | (A) | (C) | Durch messer | Konzen-tration | 150°C | | |
| | | Mol-% | | | | | | | Mol-% | | | | Gew.-% | | | µm | µm | | µm | % | | % |
| Beispiele | 1 | 78 | 22 | 100 | 40 | 60 | | 100 | | | | 100 | 60/40/0/0 | 75/-2/-/- | ABC | 300 | 50 | 20 | | | 7 | 6 | 127 |
| | | 78 | 22 | 100 | 40 | 60 | | 100 | | | | 100 | 40/60/0/0 | 75/-2/-/- | ABC | 300 | 50 | 20 | | | 6 | 7 | 121 |
| | | 67 | 33 | 100 | 40 | 60 | | 100 | 89 | 11 | 100 | 100 | 46/49/5/0 | 75/-2/75/- | ABC | 300 | 50 | 20 | 3,9 | 0,075 | 5,5 | 9 | 118 |
| V-B | 1 | 100 | | 100 | | | | | | | | 100 | 100/0/0/0 | 75/-/-/- | ABC | 300 | | | 3,9 | 0,075 | 2,5 | 11 | 95 |

TS Terephthalat, IS Isophthalat, EG Ethylenglykol
SeS Sebazat

**Patentansprüche**

1. Coextrudierte, ungestreckte, transparente und thermoformbare Polyesterfolie, enthaltend zumindest eine Basisschicht (B) aus a-PET und eine heißsiegelbare Deckschicht (A), wobei die heißsiegelbare Deckschicht (A) zumindest 80 Gew.-% Polyester umfasst, wobei

   a) der Polyester der Deckschicht (A) aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen und auf Basis von aliphatischen Diolen aufgebaut ist, wobei die Mol-%-Angaben sich immer zu 100 % ergänzen,
   b) die Deckschicht (A) bis zu 0,4 Gew.-% anorganische oder organische Partikel mit einem mittleren Durchmesser $d_{50}$ von 2,0 bis 8,0 $\mu$m enthält, wobei der $d_{50}$-Wert wie in der Beschreibung offenbart bestimmt wird,
   c) die Deckschicht (A) eine Schichtdicke von 10 bis 100 $\mu$m aufweist, und
   d) die Folie eine Dicke im Bereich von 100 bis 1500 $\mu$m aufweist, sowie
   e) eine Trübung von weniger als 10 % und eine Clarity von mindestens 80 % besitzt, wobei die Trübung und die Clarity wie in der Beschreibung offenbart bestimmt werden und
   f) eine Siegelnahtfestigkeit zu sich selbst (= FIN-Siegelung), gemessen wie in der Beschreibung offenbart, im Bereich von 3 bis 10 N/15 mm aufweist.

2. Polyesterfolie nach Anspruch 1, wobei die aromatische Dicarbonsäure ausgewählt ist aus einem oder mehreren Elementen aus der Gruppe, bestehend aus Terephthalsäure, Isophthalsäure, Phthalsäure und 2,6 Naphthalindicarbonsäure.

3. Polyesterfolie nach einem der Ansprüche 1 bis 2, wobei die aliphatische Dicarbonsäure ausgewählt ist aus einem oder mehreren Elementen aus der Gruppe, bestehend aus Bernsteinsäure, Glutarsäure, Adipinsäure, Pimelinsäure, Korksäure, Azelainsäure und Sebazinsäure, bevorzugt Adipinsäure und Sebazinsäure.

4. Polyesterfolie nach einem der Ansprüche 1 bis 3, wobei das aliphatische Diol ausgewählt ist aus einem oder mehreren Elementen aus der Gruppe, bestehend aus Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol, 1,4-Cyclohexandimethanol und Neopentylglykol.

5. Polyesterfolie nach einem der Ansprüche 1 bis 4, wobei der Polyester die folgenden Dicarboxylate und Alkylene, jeweils bezogen auf die Gesamtdicarboxylat- bzw. Gesamtalkylenmenge beinhaltet:

   • 25 bis 95 Mol-%, bevorzugt 30 bis 90 Mol-% und besonders bevorzugt 40 bis 70 Mol-% Terephthalat,
   • 0 bis 25 Mol-%, bevorzugt 5 bis 20 Mol-% und besonders bevorzugt 10 bis 20 Mol-% Isophthalat,
   • 5 bis 75 Mol -%, bevorzugt 8 bis 70 Mol-% und besonders bevorzugt 11 bis 65 Mol-%, Sebazat
   • 0 bis 50 Mol-%, bevorzugt 0 bis 40 Mol-% und besonders bevorzugt 0 bis 30 Mol-% Adipat
   • mehr als 30 Mol -%, bevorzugt mehr als 40 Mol-% und besonders bevorzugt mehr als 50 Mol-% Ethylen oder Butylen.

6. Polyesterfolie nach einem der Ansprüche 1 bis 5, wobei der Rohstoff für die Deckschicht (A) bis zu 10 Gew.-% von einem Polymer, welches mit Polyester unverträglich ist (= anti-PET-Polymer), enthält.

7. Polyesterfolie nach Anspruch 6, wobei das anti-PET-Polymer ein oder mehrere Polymere auf Basis von Ethylen (LLDPE, HDPE), Propylen (PP), Cycloolefinen (CO), Amiden (PA) oder Styrol (PS) enthält.

8. Polyesterfolie nach einem der Ansprüche 1 bis 7, wobei die Folie dreischichtig aufgebaut ist und eine Basisschicht (B), eine heißsiegelbare Deckschicht (A) auf der einen Seite der Basisschicht (B) und eine Deckschicht (C) auf der anderen Seite der Basisschicht (B) aufweist.

9. Verfahren zur Herstellung einer Polyesterfolie nach Anspruch 1, wobei die Polymere für die einzelnen Schichten A und B bzw. A, B und C der Folie in separaten Extrudern aufgeschmolzen werden und die entsprechenden Schmelzen durch eine Flachdüse coextrudiert werden, die so erhaltene Folie zur Verfestigung auf einer oder mehreren Walzen abgezogen wird und anschließend aufgerollt wird.

10. Verfahren nach Anspruch 9, wobei der Polyester für die Deckschicht (A) eine Mischung aus zwei Polyestern I und II, bevorzugt aus drei Polyestern I, II und III ist, die dem Extruder für die Schicht (A) zugeführt wird.

11. Verfahren nach Anspruch 10, wobei der Polyester I auf den folgenden Dicarboxylaten und Alkylenen, jeweils bezogen auf die Gesamtdicarboxylat- bzw. Gesamtalkylenmenge, basiert:

   • 60 bis 100 Mol-%, bevorzugt 62 bis 95 Mol-% und besonders bevorzugt 66 bis 93 Mol-% Terephthalat
   • 0 bis 40 Mol-%, bevorzugt 5 bis 38 Mol-% und besonders bevorzugt 7 bis 34 Mol-% Isophthalat,
   • mehr als 50 Mol-%, bevorzugt mehr als 65 Mol-% und besonders bevorzugt mehr als 80 Mol-% Ethyleneinheiten;

   und wobei der Polyester II auf den folgenden Dicarboxylaten und Alkylenen, jeweils bezogen auf die Gesamtdicarboxylat- bzw. Gesamtalkylenmenge, basiert:

   • 20 bis 70 Mol -%, bevorzugt 30 bis 65 Mol-% und besonders bevorzugt 35 bis 60 Mol-% Sebazat
   • 0 bis 50 Mol-%, bevorzugt 0 bis 45 Mol-% und besonders bevorzugt 0 bis 40 Mol-% Adipat
   • 10 bis 80 Mol-%, bevorzugt 20 bis 70 Mol-% und besonders bevorzugt 30 bis 60 Mol-% Terephthalat
   • 0 bis 30 Mol-%, bevorzugt 3 bis 25 Mol-% und besonders bevorzugt 5 bis 20 Mol-% Isophthalat,
   • mehr als 30 Mol-%, bevorzugt mehr als 40 Mol-% und besonders bevorzugt mehr als 50 Mol-% Ethylen oder Butylen;

   und der Polyester III auf den folgenden Dicarboxylaten und Alkylenen, jeweils bezogen auf die Gesamtdicarboxylat- bzw. Gesamtalkylenmenge, basiert:

   • 80 bis 98 Mol-%, bevorzugt 82 bis 96 Mol-% und besonders bevorzugt 74 bis 95 Mol-% Terephthalat
   • 2 bis 20 Mol-%, bevorzugt 4 bis 18 Mol-% und besonders bevorzugt 5 bis 17 Mol-% Isophthalat
   • mehr als 50 Mol-%, bevorzugt mehr als 65 Mol-% und besonders bevorzugt mehr als 80 Mol-% Ethyleneinheiten.

12. Verfahren nach Anspruch 10 oder 11, wobei der Anteil von Polyester I in der Deckschicht (A) 10 bis 60 Gew.-% und der Anteil von Polyester II 20 bis 70 Gew.-% und der Anteil von Polyester III 0 bis 15 Gew.-% beträgt.

13. Verwendung einer Polyesterfolie nach Anspruch 1 zum Verpacken von Nahrungs- und Genussmitteln, insbesondere zur Verpackung von Nahrungs- und Genussmitteln in Menüschalen.

**Claims**

1. Coextruded, unstretched, transparent and thermoformable polyester film containing at least one base layer (B) made of a-PET and a heat-sealable outer layer (A), wherein the heat-sealable outer layer (A) comprises at least 80 % by weight of polyester, wherein

   a) the polyester of the outer layer (A) is composed of 25 to 95 mol% of units derived from at least one aromatic dicarboxylic acid and 5 to 75 mol% of units derived from at least one aliphatic dicarboxylic acid, and is constructed on the basis of aliphatic diols, wherein the reported amounts in mol% always sum to 100 %,
   b) the outer layer (A) contains up to 0.4 % by weight of inorganic or organic particles having an average diameter $d_{50}$ of 2.0 to 8.0 $\mu$m, wherein the $d_{50}$ is determined as disclosed in the description,
   c) the outer layer (A) has a layer thickness of 10 to 100 $\mu$m and
   d) the film has a thickness in the range from 100 to 1500 $\mu$m and
   e) has a haze of less than 10 % and a clarity of at least 80 %, wherein the haze and the clarity are determined as disclosed in the description and
   f) has a sealed seam strength to itself (= FIN sealing) measured as disclosed in the description in the range from 3 to 10 N/15 mm.

2. Polyester film according to Claim 1, wherein the aromatic dicarboxylic acid is selected from one or more elements from the group consisting of terephthalic acid, isophthalic acid, phthalic acid and 2,6-naphthalene dicarboxylic acid.

3. Polyester film according to either of Claims 1 to 2, wherein the aliphatic dicarboxylic acid is selected from one or more elements from the group consisting of succinic acid, glutaric acid, adipic acid, pimelic acid, suberic acid, azelaic acid and sebacic acid, preferably adipic acid and sebacic acid.

4. Polyester film according to any of Claims 1 to 3, wherein the aliphatic diol is selected from one or more elements from the group consisting of ethylene glycol, 1,3-propanediol, 1,3-butanediol, 1,4-butanediol, 1,5-pentanediol, 2,2-dimethyl-1,3-propanediol, diethylene glycol, triethylene glycol, 1,4-cyclohexanedimethanol and neopentyl glycol.

5. Polyester film according to any of Claims 1 to 4, wherein the polyester includes the following dicarboxylates and alkylenes, in each case based on the total dicarboxylate/total alkylene amount:

   • 25 to 95 mol%, preferably 30 to 90 mol% and particularly preferably 40 to 70 mol% of terephthalate,
   • 0 to 25 mol%, preferably 5 to 20 mol% and particularly preferably 10 to 20 mol% of isophthalate,
   • 5 to 75 mol%, preferably 8 to 70 mol% and particularly preferably 11 to 65 mol% of sebacate,
   • 0 to 50 mol%, preferably 0 to 40 mol% and particularly preferably 0 to 30 mol% of adipate,
   • more than 30 mol%, preferably more than 40 mol% and particularly preferably more than 50 mol% of ethylene or butylene.

6. Polyester film according to any of Claims 1 to 5, wherein the raw material for the outer layer (A) contains up to 10 % by weight of a polymer incompatible with polyester (= anti-PET polymer).

7. Polyester film according to Claim 6, wherein the anti-PET polymer contains one or more polymers based on ethylene (LLDPE, HDPE), propylene (PP), cycloolefins (CO), amides (PA) or styrene (PS).

8. Polyester film according to any of Claims 1 to 7, wherein the film has a trilayered construction and comprises a base layer (B) a heat-sealable outer layer (A) on one side of the base layer (B) and an outer layer (C) on the other side of the base layer (B).

9. Process for producing a polyester film according to Claim 1, wherein the polymers for the individual layers A and B or A, B and C of the film are melted in separate extruders and the corresponding melts are coextruded through a flat die, the thus obtained film is hauled off onto one or more rollers and subsequently rolled up.

10. Process according to Claim 9, wherein the polyester for the outer layer (A) is a mixture of two polyesters I and II, preferably of three polyesters I, II and III, which is supplied to the extruder for the layer (A).

11. Process according to Claim 10, wherein the polyester I is based on the following dicarboxylates and alkylenes, in each case based on the total dicarboxylate/total alkylene amount:

   • 60 to 100 mol%, preferably 62 to 95 mol% and particularly preferably 66 to 93 mol% of terephthalate,
   • 0 to 40 mol%, preferably 5 to 38 mol% and particularly preferably 7 to 34 mol% of isophthalate,
   • more than 50 mol%, preferably more than 65 mol% and particularly preferably more than 80 mol% of ethylene units;

   and wherein the polyester II is based on the following dicarboxylates and alkylenes, in each case based on the total dicarboxylate/total alkylene amount:

   • 20 to 70 mol%, preferably 30 to 65 mol% and particularly preferably 35 to 60 mol% of sebacate,
   • 0 to 50 mol%, preferably 0 to 45 mol% and particularly preferably 0 to 40 mol% of adipate,
   • 10 to 80 mol%, preferably 20 to 70 mol% and particularly preferably 30 to 60 mol% of terephthalate
   • 0 to 30 mol%, preferably 3 to 25 mol% and particularly preferably 5 to 20 mol% of isophthalate,
   • more than 30 mol%, preferably more than 40 mol% and particularly preferably more than 50 mol% of ethylene or butylene;

   and the polyester III is based on the following dicarboxylates and alkylenes, in each case based on the total dicarboxylate/total alkylene amount:

   • 80 to 98 mol%, preferably 82 to 96 mol% and particularly preferably 74 to 95 mol% of terephthalate
   • 2 to 20 mol%, preferably 4 to 18 mol% and particularly preferably 5 to 17 mol% of isophthalate,
   • more than 50 mol%, preferably more than 65 mol% and particularly preferably more than 80 mol% of ethylene units.

**12.** Process according to Claim 10 or 11, wherein the proportion of polyester I in the outer layer (A) is 10 % to 60 % by weight and the proportion of polyester II is 20 % to 70 % by weight and the proportion of polyester III is 0 % to 15 % by weight.

**13.** Use of a polyester film according to Claim 1 for packaging foodstuffs and other consumables, in particular for packaging foodstuffs and other consumables in trays.

**Revendications**

**1.** Feuille de polyester coextrudée, non étirée, transparente et thermoformable, comprenant au moins une couche de base (B) en a-PET et une couche supérieure thermoscellable (A), dans laquelle la couche supérieure thermoscellable (A) comprend au moins 80 % en poids de polyester, dans laquelle

a) le polyester de la couche supérieure (A) est composé de 25 à 95 % en moles de motifs à base d'au moins un acide dicarboxylique aromatique et 5 à 75 % en moles de motifs à base d'au moins un acide dicarboxylique aliphatique, et est composé à base de diols aliphatiques, dans laquelle les indications de % en moles totalisent toujours 100 %,
b) la couche supérieure (A) contient jusqu'à 0,4 % en poids de particules inorganiques ou organiques avec un diamètre moyen $d_{50}$ de 2,0 à 8,0 $\mu$m, dans laquelle la valeur $d_{50}$ est déterminée tel que divulgué dans la description,
c) la couche supérieure (A) a une épaisseur de couche de 10 à 100 $\mu$m, et
d) la feuille a une épaisseur de 100 à 1500 $\mu$m, et
e) a un voile inférieur à 10 % et une clarté d'au moins 80 %, dans laquelle le voile et la clarté sont déterminées tel que divulgué dans la description et
f) a une résistance de soudure à soi-même (= soudure FIN), mesurée tel que divulgué dans la description, dans la plage de 3 à 10 N/15 mm.

**2.** Feuille de polyester selon la revendication 1, dans laquelle l'acide dicarboxylique aromatique est choisi parmi un ou plusieurs éléments du groupe constitué par l'acide téréphtalique, l'acide isophtalique, l'acide phtalique et l'acide naphtalène-2,6-dicarboxylique.

**3.** Feuille de polyester selon l'une des revendications 1 à 2, dans laquelle l'acide dicarboxylique aliphatique est choisi parmi un ou plusieurs éléments du groupe constitué par l'acide succinique, l'acide glutarique, l'acide adipique, l'acide pimélique, l'acide subérique, l'acide azélaïque et l'acide sébacique, de préférence l'acide adipique et l'acide sébacique.

**4.** Feuille de polyester selon l'une des revendications 1 à 3, dans laquelle le diol aliphatique est choisi parmi un ou plusieurs éléments du groupe constitué par l'éthylène glycol, le propane-1,3-diol, le butane-1,3-diol, le butane-1,4-diol, le pentane-1,5-diol, le 2,2-dimethyl-1,3-propanediol, le diéthy-lène glycol, le triéthylène glycol, le 1,4-cyclohexanediméthanol et le néopentyl glycol.

**5.** Feuille de polyester selon l'une des revendications 1 à 4, dans laquelle le polyester contient les dicarboxylates et les alkylènes suivants, rapportés respectivement à la quantité totale de dicarboxylate ou à la quantité totale d'alkylène:

• de 25 à 95 % en moles, de préférence de 30 à 90 % en moles et de manière particulièrement préférée de 40 à 70 % en moles de téréphtalate,
• de 0 à 25 % en moles, de préférence de 5 à 20 % en moles et de manière particulièrement préférée de 10 à 20 % en moles d'isophtalate,
• de 5 à 75 Mol -%, de préférence de 8 à 70 % en moles et de manière particulièrement préférée de 11 à 65 % en moles de sébaçate
• de 0 à 50 % en moles, de préférence de 0 à 40 % en moles et de manière particulièrement préférée de 0 à 30 % en moles d'adipate
• plus de 30 Mol -%, de préférence plus de 40 % en moles et de manière particulièrement préférée plus de 50 % en moles d'éthylène ou de butylène.

**6.** Feuille de polyester selon l'une des revendications 1 à 5, dans laquelle la matière première pour la couche supérieure (A) contient jusqu'à 10 % en poids d'un polymère incompatible avec le polyester (= polymère anti-PET).

7. Feuille de polyester selon la revendication 6, dans laquelle le polymère anti-PET contient un ou plusieurs polymères à base d'éthylène (LLDPE, HDPE), de propylène (PP), de cyclooléfines (CO), d'amides (PA) ou de styrène (PS).

8. Feuille de polyester selon l'une des revendications 1 à 7, dans laquelle la feuille a une structure à trois couches et comporte une couche de base (B), une couche supérieure thermoscellable (A) sur une face de la couche de base (B) et une couche supérieure (C) sur l'autre face de la couche de base (B).

9. Procédé de fabrication d'une feuille de polyester selon la revendication 1, dans lequel les polymères pour les couches individuelles A et B ou A, B et C de la feuille sont fondus dans des extrudeuses séparées et les masses fondues correspondantes sont coextrudées à travers une filière plate, le film ainsi obtenu est étiré sur un ou plusieurs rouleaux pour solidifier, puis enroulé.

10. Procédé selon la revendication 9, dans lequel le polyester pour la couche supérieure (A) est un mélange de deux polyesters I et II, de préférence de trois polyesters I, II et III, qui est introduit dans l'extrudeuse pour la couche (A).

11. Procédé selon la revendication 10, dans lequel le polyester I est basé sur les dicarboxylates et alkylènes suivants, rapportés respectivement à la quantité totale de dicarboxylate ou à la quantité totale d'alkylène:

   • de 60 à 100 % en moles, de préférence de 62 à 95 % en moles et de manière particulièrement préférée de 66 à 93 % en moles de téréphtalate,
   • de 0 à 40 % en moles, de préférence de 5 à 38 % en moles et de manière particulièrement préférée de 7 à 34 % en moles d'isophtalate,
   • plus de 50 % en moles, de préférence plus de 65 % en moles et de manière particulièrement préférée plus de 80 % en moles de motifs éthylène;

   et dans lequel le polyester II est basé sur les dicarboxylates et alkylènes suivants, rapportés respectivement à la quantité totale de dicarboxylate ou à la quantité totale d'alkylène:

   • de 20 à 70 Mol -%, de préférence de 30 à 65 % en moles et de manière particulièrement préférée de 35 à 60 % en moles de sébaçate
   • de 0 à 50 % en moles, de préférence de 0 à 45 % en moles et de manière particulièrement préférée de 0 à 40 % en moles d'adipate
   • de 10 à 80 % en moles, de préférence de 20 à 70 % en moles et de manière particulièrement préférée de 30 à 60 % en moles de téréphtalate
   • de 0 à 30 % en moles, de préférence de 3 à 25 % en moles et de manière particulièrement préférée de 5 à 20 % en moles d'isophtalate,
   • plus de 30 % en moles, de préférence plus de 40 % en moles et de manière particulièrement préférée plus de 50 % en moles d'éthylène ou de butylène;

   et le polyester III est basé sur les dicarboxylates et alkylènes suivants, rapportés respectivement à la quantité totale de dicarboxylate ou à la quantité totale d'alkylène:

   • de 80 à 98 % en moles, de préférence de 82 à 96 % en moles et de manière particulièrement préférée de 74 à 95 % en moles de téréphtalate
   • de 2 à 20 % en moles, de préférence de 4 à 18 % en moles et de manière particulièrement préférée de 5 à 17 % en moles d'isophtalate
   • plus de 50 % en moles, de préférence plus de 65 % en moles et de manière particulièrement préférée plus de 80 % en moles de motifs éthylène.

12. Procédé selon la revendication 10 ou 11, dans lequel la proportion de polyester I dans la couche supérieure (A) est de 10 à 60 % en poids et la proportion de polyester II est de 20 à 70 % en poids et la proportion de polyester III est de 0 à 15 % en poids.

13. Utilisation d'une feuille de polyester selon la revendication 1 pour l'emballage d'aliments et de produits de luxe, en particulier pour l'emballage d'aliments et de produits de luxe dans des plateaux de menu.

Figur 1

420

175,5

Form (1)

132

300

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2643238 B1
- EP 3296227 A1
- DE 10318102 A1
- DE 69706201 T2
- EP 1068949 A
- JP 5009319 A

- EP 0283164 A
- EP 0407870 A
- EP 0485893 A
- EP 0503422 A
- EP 1475228 B1
- EP 1138480 B1